**Europäisches Patentamt**

**European Patent Office**

**Office européen des brevets**

(19)

(11) Publication number : **0 480 859 A2**

# (12) EUROPEAN PATENT APPLICATION

(21) Application number : **91480138.6**

(22) Date of filing : **06.09.91**

(51) Int. Cl.⁵ : **G06F 3/033**

(30) Priority : **10.10.90 US 595334**

(43) Date of publication of application :
**15.04.92 Bulletin 92/16**

(84) Designated Contracting States :
**DE ES FR GB IT**

(71) Applicant : **International Business Machines Corporation**
**Old Orchard Road**
**Armonk, N.Y. 10504 (US)**

(72) Inventor : **Torres, Robert J.**
**6100 Meadowhill Drive**
**Colleyville, TX 76034 (US)**
Inventor : **Griffin, David Lee**
**1521 Rockwood Drive**
**Keller, TX 76248 (US)**
Inventor : **Fleming, Stephen S.**
**3633 Herschel Avenue**
**Dallas, TX 75219 (US)**

(74) Representative : **Tubiana, Max**
**Compagnie IBM France Département de Propriété Intellectuelle**
**F-06610 La Gaude (FR)**

(54) Computer user interface with visual indication of validity of a target object during a direct manipulation operation.

(57) Disclosed is a computer system user interface in which the user is provided with a visual indication of whether or not a source object is over a valid target object during direct manipulation operations. A shadow is displayed behind the source object. When the source object is over a valid target, the size of the shadow is reduced or eliminated to give the appearance that the source and target are attracted to each other. When the source object is over an invalid target, the size of the shadow is increased to give the appearance that the source object is repelled by the target object.

EP 0 480 859 A2

## BACKGROUND OF THE INVENTION

### Field of the Invention

The present invention relates generally to computer system user interfaces, and more particularly to a windowed computer system user interface that gives the user visual feedback with respect to the validity of a target object during direct manipulation.

### Description of the Prior Art

Conventional user interfaces provide icons to represent objects. These icons may be directly manipulated in order to perform useful tasks. Direct manipulation is a set of standard techniques that lets a user handle electronic objects in ways similar to the way their corresponding objects are handled in the physical world. Direct manipulation is the electronic method of directly applying one or more actions to an object.

The majority of direct manipulation operations use dragging techniques. A drag takes place when the mouse pointer is placed on the object and mouse button two is pressed and held down while the mouse is moved so that the pointer travels to a different location on the screen. The drag ends when mouse button two is released. Most dragging operations involve a source object and a target object. The source object for a direct manipulation operation is identified by the location of the mouse pointer when button two is pressed. The target is identified by the location of the mouse pointer when button two is released. When button two is released, the source object is said to be "dropped" on the target object.

When the source object is dropped on the target object, the computer-system performs an operation. For example, when a document object is dropped on a folder object, the document represented by the document object is moved to folder or electronic file represented by the folder object. When a document object is dropped on an out-basket object, a copy of the document is placed in the outgoing mail while the original of the document is retained in its original location.

Certain objects cannot be directly manipulated with respect to each other. The user can move a source object and drop it anywhere on the screen he or she wants to, but there are certain target objects that are invalid for certain source objects. For example, dropping a document object on a telephone object does not result in any action.

Current implementations provide only limited visual feedback to the user during direct manipulation operations. The feedback typically consists of creating a shadow box or other visual form to indicate that an object has been "grabbed" and displaying a universal "not" sign when the source object is over an invalid target.

### Summary of the Invention

In the present invention, a shadow is displayed behind the source object during direct manipulation. When the source object is over a valid target object, the size of the shadow is decreased. This gives the user the impression that the source object is attracted to the target object and it indicates visually that the target is valid for the source. When the source object is over an invalid target object, the size of the shadow is increased. This gives the user the impression that the source object is repelled from the target object and it indicates visually that the target is invalid for the source. The present invention gives the user rich visual intuitive feedback during direct manipulation.

### Brief Description of the Drawings

Figure 1 is a pictorial view of a "Desk Top" window.

Figure 2 is a pictorial view similar to Figure 1 in which a security stamp object icon has been moved to a position over a "contracts" folder object icon.

Figure 3 is a pictorial view similar to Figure 1 in which the security stamp object icon has been moved to a position over a "telephone" object icon.

Figure 4 is a flow chart of a preferred software implementation of the present invention.

Figure 5 is a flowchart of a software implementation of the "valid target" routine of the present invention.

Figure 6 is a flowchart of a software implementation of the "invalid target" routine of the present invention.

### Description of the Preferred Embodiment

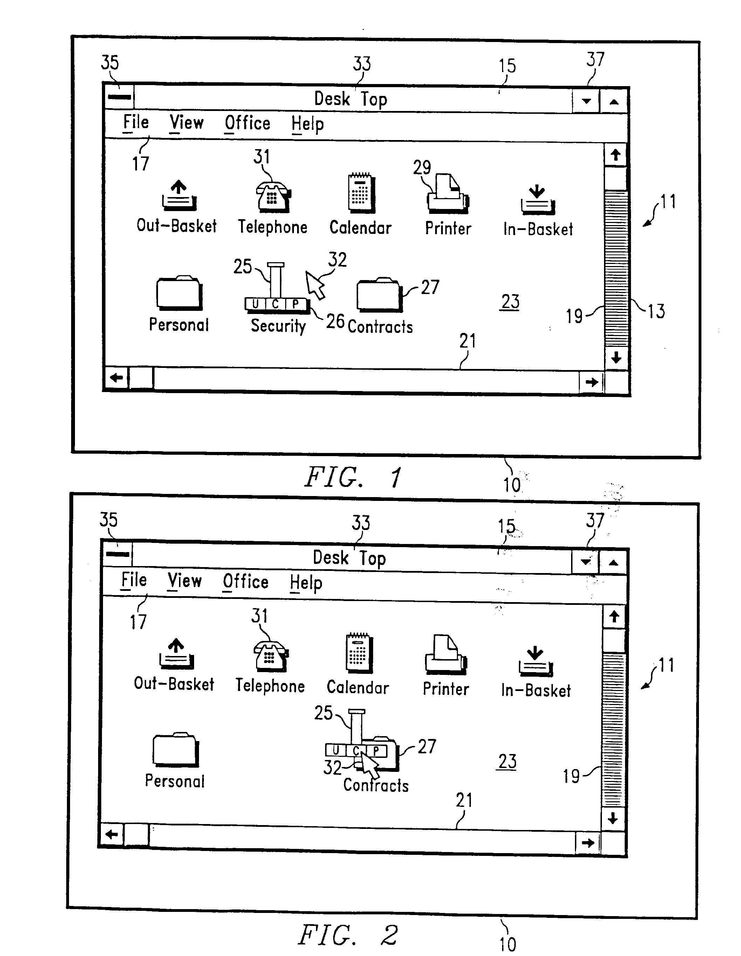

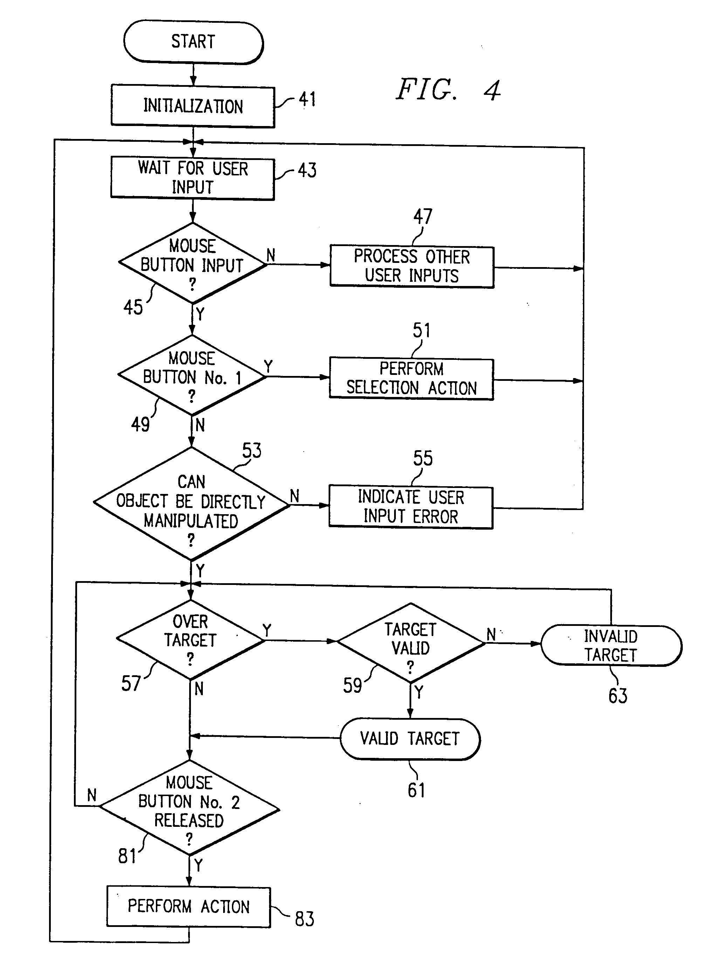

Referring now to the drawing, and first to Figure 1, a window is designated generally by the numeral 11. Window 11 includes a border or frame 13 that forms the outer boundary of the window. Contained within border 13 are a title bar 15, an action bar 17, and scroll bars 19 and 21.

The remainder of window 11 consists of a client area 23, which is populated with a plurality of icons, including a security stamp icon 25, a contracts folder icon 27, a printer icon 29, and a telephone icon 31. Each icon has a shadow displayed behind it. For example, security stamp icon 25 has a shadow 26 displayed behind it. Also located within client area 23 is a pointer 32 that the user can manipulate by means of a mouse or the like.

Title bar 15 includes a window title 33, which identifies the window, a system menu icon 35, and window sizing icons 37. System menu icon 35 allows the user to display a pull-down menu containing actions that the user can perform on the window. Such actions are related to the window itself and not to the object that is displayed in the window. For example, actions include MOVE, which allows the user to reposition the window on the screen 10, MINIMIZE, which reduces the size of the window, MAXIMIZE, which enlarges the window to the size of the screen. Window sizing icons 37 provide a fast way to use a mouse or pointing device to perform the actions of MINIMIZE and MAXIMIZE without requiring a menu.

Action bar 17 contains a list of the actions of the applications shown in the window. Each action in the list in the action bar has an associated pull-down menu that lists the individual actions that are contained within each general action listed in action bar 17. For example, the FILE pull-down enables the user to work with files through actions that manipulate the file as a whole.

Scroll bars 19 and 21 allow the user, in effect, to move window frame 13 to view parts of client area 23 that are located outside frame 13.

Referring now to Figure 2, the user has attached pointer 32 to security stamp icon 25 by depressing mouse button number two (not shown) and has moved security stamp icon 25 with pointer 32 attached thereto to a position over contracts folder icon 27. Comparing Figures 1 and Figure 2, it will be observed that shadow 26 has been reduced to nothing in Figure 2. The reduction of the size of the shadow makes security stamp icon 25 appear closer to contracts folder icon 27 as if they were attracted to each other. The appearance of attraction indicates to the user that contracts folder icon 27 is a valid target object for the source object security stamp icon 25. If mouse button number two were released, the security stamp information of stamp icon 25 would be applied to the documents in folder 27.

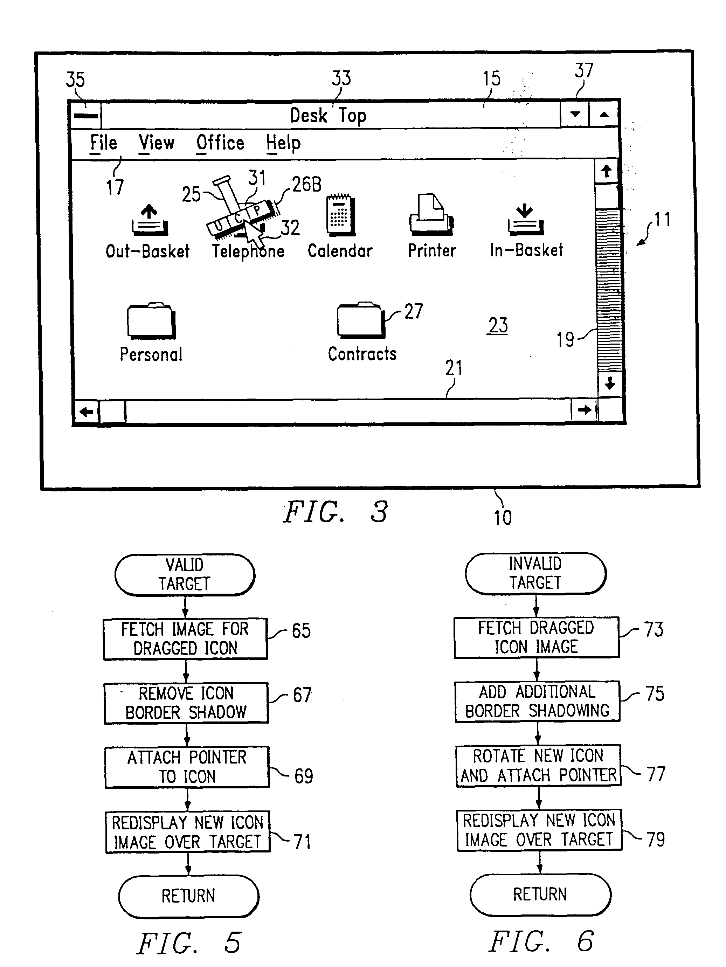

Referring now to Figure 3, the user has moved security stamp icon 25 with pointer 32 attached thereto on top of telephone icon 31. A telephone icon is not a valid target object for direct manipulation with respect to a security stamp icon source object. Thus, in the present invention, the size of the shadow displayed behind stamp icon 25 is enlarged, as indicated by the numeral 26b, to make stamp icon 25 appear further from telephone icon 31 as if they are repelled from each other. Also, stamp icon 25 is rotated somewhat to give the user further visual indication that telephone icon 31 is not a valid target for stamp icon 25. In the preferred embodiment, the rotation is dynamic in that rotation begins as the source begins to pass over the target and it reaches its maximum when the source is directly over the target.

Referring now to Figure 4, there is shown a flow chart of a preferred software implementation of the present invention. The system is initialized at block 41 and the user input is monitored at block 43. As shown at decision block 45, if there is user input but no mouse button input, then the system processes other user inputs at block 47 and returns to block 43 to await further user input.

If, however, there is mouse button input, then, at decision block 49, the system tests whether mouse button one or two is pressed. If mouse button one is pressed, then the system performs a selection action at block 51. If mouse button number one is not pressed then, by default, mouse button number two is pressed, which indicates that the user desires to perform a direct manipulation operation and the system tests at decision block 53 whether the source object can be directly manipulated. If it cannot, a user input error is indicated at block 55 and the system returns to block 43 to monitor user input.

If the object can be directly manipulated, the system tests at decision block 57 whether the source object is over a target, i.e. whether the source object is over an icon, which is a target, or over an empty piece of screen or a window border or the like, which are not targets. If the source object is over target, then the system tests at decision block 59 whether the target is valid. If the target is valid, the system executes the valid target routine on block 61. If the target is invalid, the system executes the invalid target routine at block 63.

The valid target routine of block 61 is shown in detail in Figure 5. The image for the dragged icon is fetched at block 65 and the icon border shadow is removed at block 67. Then, the pointer is attached to the icon at block 69, and the new icon with the pointer attached thereto is redisplayed over the target object at block 71.

The invalid target routine of block 63 is shown in detail in Figure 6. The dragged icon image is fetched at block 73 and additional border shadowing is added at block 75. Then, the new icon is rotated and the pointer is attached thereto at block 77. Finally, the new icon image is redisplayed over the target at block 79.

Returning to Figure 4, after the system has executed the invalid target routine at block 63, the system returns to decision block 57 to test whether or not the source object is over a target. If the source object is not over a target, or if the source object is over a target and the valid target routine of block 61 has been executed, the system tests at decision block 81 whether mouse button two is released. If not, the system returns to decision block 57 in effect to monitor user input. If mouse button two is released, they the system performs the appropriate action at decision block 83, whereupon the system returns to block 43 to monitor user input.

From the foregoing, those-skilled in the art will see that the present invention overcomes many shortcoming of the prior art. The user is provided with immediate visual feedback during direct manipulation. This increased feedback enables the user to operate the system more easily and to avoid errors and mistakes.

While the invention has been particularly shown and described with reference to a preferred embodiment, those skilled in the art will understand that various changes in form and detail may be made without departing from the spirit and scope of the invention.

**Claims**

1. A graphical method of performing a direct manipulation of a source object in a computer system, which comprises the steps of:
   displaying a shadow behind said source object;
   and decreasing the size of shadow whenever said source object is over a valid target object.

2. The method as claimed in claim 1, wherein the step of decreasing the size of said shadow includes the step of removing said shadow.

3. The method as claimed in claim 1, including the step of increasing the size of said shadow whenever said source object is over an invalid target object.

4. The method as claimed in claim 1, including the step of:
   changing the orientation of the source object whenever the source object is over an invalid target object.

5. A graphical method of performing a direct manipulation of a source object in a computer system, which comprises the steps of:
   displaying a shadow behind said source object; and
   increasing the size of said shadow whenever said source object is over an invalid target object.

6. The method as claimed in claim 5, including the step of:
   decreasing the size of said shadow whenever said source object is over a valid target object.

7. In a graphical method of performing a direct manipulation of a source object in a computer system, said source object having a shadow displayed therebehind, the improvement which comprises:
   decreasing the size of said shadow whenever said source object is over a valid target object.

8. The improvement as claimed in claim 7, including the step of:
   increasing the size of said shadow whenever said source object is over an invalid target.

9. In a graphical method of performing a direct manipulation of a source object in a computer system, said source object having a shadow displayed therebehind, the improvement which comprises:
   increasing the size of said shadow whenever said source object is over an invalid target object.

10. The improvement as claimed in claim 9, including the step of:
    decreasing the size of said shadow whenever said object is over a valid target object.

FIG. 1

FIG. 2

*FIG. 4*

```
            ( START )
                |
                v
        +------------------+
        |  INITIALIZATION  |——41
        +------------------+
                |
                v
        +------------------+
        |  WAIT FOR USER   |——43
        |      INPUT       |
        +------------------+
                |
                v
            /MOUSE \                    47
           /  BUTTON \   N      +------------------+
          <   INPUT    >——————> |  PROCESS OTHER   |————————>
           \    ?    /          |   USER INPUTS    |
            \      /            +------------------+
          45  \  /
               |Y
               v
            /MOUSE \                    51
           / BUTTON \    Y     +------------------+
          <  No. 1    >——————> |     PERFORM      |————————>
           \    ?    /         |  SELECTION ACTION |
            \      /           +------------------+
          49  \  /
               |N
         53    v
            /  CAN  \                   55
          /  OBJECT  \   N    +------------------+
         < BE DIRECTLY >————> |  INDICATE USER   |
          \ MANIPULATED/      |   INPUT ERROR    |
           \    ?    /        +------------------+
            \      /
               |Y
               v
            / OVER \         / TARGET \   N     ( INVALID  )
          <  TARGET >——Y——> <  VALID   >—————> (  TARGET  )
           \   ?   /         \    ?   /          
          57 \   /N        59 \    /Y               63
             |                  |
             |                  v
             |              ( VALID TARGET )
             |                  61
             v
         /MOUSE  \
    N   / BUTTON  \
  <————< No. 2     >
         \RELEASED/
       81 \    ?  /
            \   /Y
             v
        +------------------+
        | PERFORM ACTION   |——83
        +------------------+
```

FIG. 3

**FIG. 5**

VALID TARGET

→ FETCH IMAGE FOR DRAGGED ICON — 65

→ REMOVE ICON BORDER SHADOW — 67

→ ATTACH POINTER TO ICON — 69

→ REDISPLAY NEW ICON IMAGE OVER TARGET — 71

→ RETURN

**FIG. 6**

INVALID TARGET

→ FETCH DRAGGED ICON IMAGE — 73

→ ADD ADDITIONAL BORDER SHADOWING — 75

→ ROTATE NEW ICON AND ATTACH POINTER — 77

→ REDISPLAY NEW ICON IMAGE OVER TARGET — 79

→ RETURN